# EUROPÄISCHE PATENTANMELDUNG

(11) **EP 3 904 756 A1**
(43) Veröffentlichungstag der Anmeldung: **03.11.2021**
(21) Anmeldenummer: 20171812.9
(22) Anmeldetag: 28.04.2020
(51) Int. Cl.: F21S 41/39, F21S 45/47, F21S 45/49, G02B 7/18, G02B 26/08, G03B 21/00, G03B 21/16, F21S 41/675

(54) **BELEUCHTUNGSVORRICHTUNG FÜR EINEN KRAFTFAHRZEUGSCHEINWERFER**

(71) Anmelder: ZKW Group GmbH, 3250 Wieselburg (AT)
(72) Erfinder: Längauer, Christoph, 3293 Lunz am See (AT); Elsler, Philipp, 3131 Walpersdorf (AT); Riegler, Hans-Jörg, 3252 Petzenkrichen (AT)
(74) Vertreter: Patentanwaltskanzlei Matschnig & Forsthuber OG

(57) **Zusammenfassung**

Beleuchtungsvorrichtung (1) für einen Kraftfahrzeugscheinwerfer, umfassend ein optoelektronisches Bauteil (2), ein Kühlelement (3), eine Leiterplatte (4), ein Stabilisierungselement (5) und ein Befestigungselement (6), wobei das Stabilisierungselement (5) eine Öffnung (5a) zum Umschließen des optoelektronischen Bauteils (2) aufweist, wobei sich von einem Rand der Öffnung (5a) weg zumindest zwei Stabilisierungsarme (7) erstrecken, welche dazu eingerichtet sind, an dem optoelektronischen Bauteil (2) anzugreifen, wobei das Kühlelement (3) das optoelektronische Bauteil (2) an einer einer Wirkseite des optoelektronischen Bauteils abgewandten Seite dergestalt kontaktiert, dass dieses auf das optoelektronische Bauteil (2) einen in Richtung der Wirkseite des optoelektronischen Bauteils (2) wirkenden Druck ausübt, wobei die zumindest zwei Stabilisierungsarme (7) dergestalt federnd ausgebildet sind und an der Wirkseite des optoelektronischen Bauteils (2) angreifen, dass die zumindest zwei Stabilisierungsarme (7) diesem Druck des Kühlelements (3) entgegenwirken.

## Beschreibung

Die Erfindung eine Beleuchtungsvorrichtung für einen Kraftfahrzeugscheinwerfer, umfassend
- ein optoelektronisches Bauteil, wobei das optoelektronische Bauteil eine Wirkseite aufweist, an welcher eine steuerbare Anordnung von mehreren Mikrospiegeln angeordnet ist, welche Mikrospiegel in Form einer zweidimensionalen Matrix mit Zeilen und Spalten angeordnet sind und unabhängig voneinander verschwenkbar sind,
- ein Kühlelement, welches das optoelektronische Bauteil an einer der Wirkseite abgewandten Seite zur Kühlung des optoelektronischen Bauteils kontaktiert,
- eine Leiterplatte, welche zumindest teilweise zwischen dem Kühlelement und dem optoelektronischen Bauteil angeordnet ist und mit dem optoelektronischen Bauteil zu dessen elektronischer Ansteuerung verbunden ist,
- ein Stabilisierungselement, welches dazu eingerichtet ist, die Position des optoelektronischen Bauteils in Bezug auf die Leiterplatte zusätzlich zu stabilisieren,
- ein Befestigungselement, welches dazu eingerichtet ist, das Stabilisierungselement und das Kühlelement miteinander zu verbinden.

Die Erfindung betrifft ferner einen Kraftfahrzeugscheinwerfer mit einer Beleuchtungsvorrichtung.

Im Stand der Technik sind Beleuchtungsvorrichtungen für Kraftfahrzeuge bekannt, welche ein optoelektronisches Bauteil aufweisen. Das optoelektronische Bauteil wird üblicherweise an einem Kühlelement oder einer Halterung befestigt, wobei zwischen dem Kühlelement bzw. der Halterung und dem optoelektronischen Bauteil Federelemente angeordnet sind, um unerwünschte Bewegungen des optoelektronischen Bauteils auszugleichen. Nachteiligerweise wird durch die Federelemente die strukturelle Komplexität der Beleuchtungsvorrichtungen erhöht, was wiederrum zu erhöhten Kosten führt.

Die Aufgabe der vorliegenden Erfindung besteht darin, die Nachteile des Standes der Technik zu lindern bzw. zu beseitigen. Die Erfindung setzt sich daher insbesondere zum Ziel, eine Beleuchtungsvorrichtung zu schaffen, bei welcher die Befestigung des optoelektronischen Bauteils verbessert wird.

Diese Aufgabe wird durch eine Beleuchtungsvorrichtung mit den Merkmalen von Anspruch 1 gelöst. Bevorzugte Ausführungen sind in den abhängigen Ansprüchen angegeben.

Erfindungsgemäß weist das Stabilisierungselement eine Öffnung zum Umschließen des optoelektronischen Bauteils auf, wobei sich von einem Rand der Öffnung weg zumindest zwei Stabilisierungsarme erstrecken, welche dazu eingerichtet sind, im verbundenen Zustand an der Wirkseite des optoelektronischen Bauteils an dem optoelektronischen Bauteil anzugreifen, wobei im verbundenen Zustand das Kühlelement das optoelektronische Bauteil an der der Wirkseite abgewandten Seite dergestalt kontaktiert, dass dieses auf das optoelektronische Bauteil einen in Richtung der Wirkseite des optoelektronischen Bauteils wirkenden Druck ausübt, wobei die zumindest zwei Stabilisierungsarme dergestalt federnd ausgebildet sind und an der Wirkseite des optoelektronischen Bauteils angreifen, dass die zumindest zwei Stabilisierungsarme diesem Druck des Kühlelements entgegenwirken.

Vorteilhafterweise wird dadurch kein separates Federelement zwischen dem Kühlelement und dem optoelektronischen Bauteils benötigt. Es wird auch kein separates Federelement zwischen einer Halterung für das optoelektronische Bauteil und dem optoelektronischen Bauteil benötigt. Die federnde Wirkung wird durch die Stabilisierungsarme erzeugt, welche ein Teil des Stabilisierungselements sind. Die Stabilisierungsarme und das Stabilisierungselement sind im Wesentlichen ein und derselbe Bauteil. Die Stabilisierungsarme können dergestalt federnd ausgebildet sein, um dem Druck des Kühlelements entgegenzuwirken. Dadurch kann das optoelektronische Bauteil stabil und gleichzeitig federnd gehalten werden. Als verbundenen Zustand wird in diesem Zusammenhang ein Zustand verstanden, in welchem das Stabilisierungselement mit dem Kühlelement mittels des Befestigungselements verbunden ist.

Es kann vorgesehen sein, dass die Stabilisierungsarme und die Öffnung in derselben Ebene liegen. Dadurch ist eine besonders kompakte Bauweise des Stabilisierungselements möglich. Es kann vorgesehen sein, dass die Öffnung im Wesentlichen rechteckig ausgebildet ist. Da optoelektronische Bauteile üblicherweise rechteckig ausgebildet sind, ergibt sich damit der Vorteil, dass das optoelektronische Bauteil ideal in die Öffnung passen kann bzw. von der Öffnung umgeben werden kann. Bevorzugt hat die Öffnung im Wesentlichen das gleiche Verhältnis zwischen Länge und Breite wie das optoelektronische Bauteil, wobei die Länge und die Breite der Öffnung mindestens 1%, bevorzugt 2-5%, insbesondere 6-10%, größer sind als die Länge und die Breite des optoelektronischen Bauteils.

Es kann vorgesehen sein, dass ein erster Stabilisierungsarm im Wesentlichen parallel zu einer ersten Seite der im Wesentlichen rechteckigen Öffnung orientiert ist und zweiter Stabilisierungsarm im Wesentlichen parallel zu einer zweiten Seite der im Wesentlichen rechteckigen Öffnung orientiert ist. Jeder Stabilisierungsarm kann einen ersten Abschnitt aufweisen, welcher sich beispielsweise orthogonal von der entsprechenden Seite der Öffnung weg erstreckt, und einen daran anschließenden zweiten Abschnitt aufweisen, welcher sich parallel zur jener Seite der Öffnung, von welcher sich der erste Abschnitt erstreckt, verläuft. Wobei der erste Abschnitt vorzugsweise kürzer ist als der zweite Abschnitt. Die Stabilisierungsarme sind vorzugsweise im Wesentlichen L-förmig ausgestaltet, wobei der kürzere L-Schenkel sich orthogonal von einer Seite der Öffnung weg erstreckt und der längere L-Schenkel sich parallel zu der gleichen Seite der Öffnung erstreckt. Durch die L-förmige Ausgestaltung kann eine besonders gute federnde Wirkung erzielt werden.

Es kann vorgesehen sein, dass ein erster Stabilisierungsarm und ein zweiter Stabilisierungsarm an sich gegenüberliegenden Seiten der im Wesentlichen rechteckigen Öffnung angeordnet sind. Dadurch ergibt sich der Vorteil, dass das optoelektronische Bauteil durch die Stabilisierungsarme besonders stabil in der Öffnung gehalten werden kann. Vorzugsweise ist an allen vier Seiten der rechteckigen Öffnung jeweils ein Stabilisierungsarm, welche insbesondere parallel zu der entsprechenden Seite verlaufen, angeordnet.

Es kann vorgesehen sein, dass die Länge eines Stabilisierungsarmes vorzugsweise 25% bis 75%, insbesondere 40% bis 60%, besonders bevorzugt 50%, der Länge einer Rechteckseite entspricht. Vorteilhafterweise kann dadurch eine besonders gute Federwirkung erreicht werden.

Es kann vorgesehen sein, dass die Beleuchtungsvorrichtung eine Lichtquelle umfasst, welche dazu eingerichtet ist, Licht auf das optoelektronische Bauteil abzustrahlen.

Es kann vorgesehen sein, dass das Befestigungselement zumindest zwei Schrauben umfasst, mit welchen im verbundenen Zustand das Stabilisierungselement mit dem Kühlelement verschraubt ist. Vorteilhafterweise kann dadurch das Stabilisierungselement besonders einfach und kostengünstig mit dem Kühlelement verbunden werden.

Es kann vorgesehen sein, dass das optoelektronische Bauteil an der Wirkseite zumindest zwei Haltebereiche aufweist, wobei an jedem Haltebereich jeweils ein Stabilisierungsarm anliegt. Der Haltebereich ist vorzugsweise frei von Mikrospiegeln.

Es kann vorgesehen sein, dass das Stabilisierungselement plattenförmig ausgestaltet ist.

Es kann vorgesehen sein, dass das Stabilisierungselement aus einem wärmeisolierenden Material ausgebildet ist oder eine wärmeisolierende Beschichtung aufweist. Dadurch ergibt sich der Vorteil, dass eine unerwünschte Erwärmung der Mikrospiegel und/oder der Steuerungsmittel der Mikrospiegel reduziert wird, wodurch die Funktion der Mikrospiegel durch Wärme nicht negativ beeinflusst wird.

Erfindungsgemäß ist ein Kraftfahrzeugscheinwerfer vorgesehen, welcher die Beleuchtungsvorrichtung umfasst.

Im Rahmen dieser Beschreibung sind die Begriffe "oben", "unten", "horizontal", "vertikal" als Angaben der Ausrichtung zu verstehen, wenn die Beleuchtungsvorrichtung in normaler Benutzungsstellung angeordnet ist, nachdem sie in einem Kraftfahrzeugscheinwerfer eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
- Fig. 1: eine Ansicht einer erfindungsgemäßen Beleuchtungsvorrichtung; und
- Fig. 2: seitliche Ansicht der Beleuchtungsvorrichtung gemäß Fig. 1.

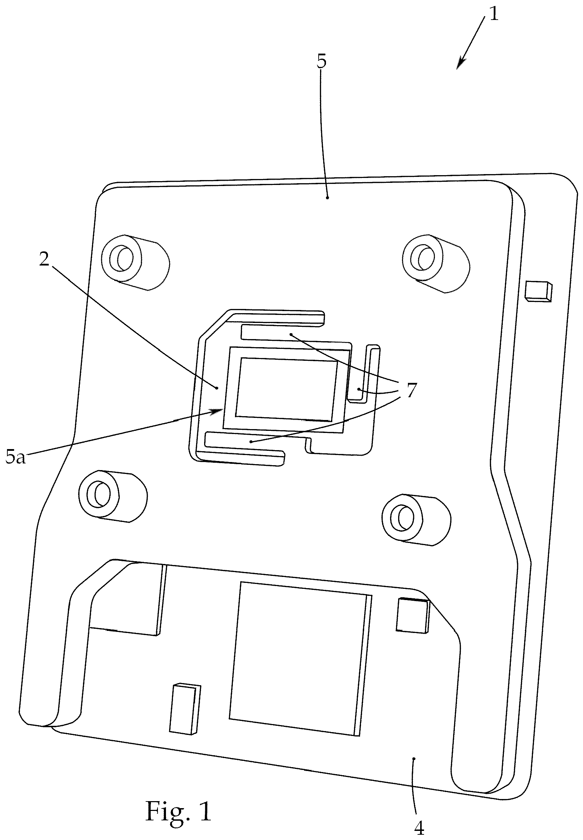

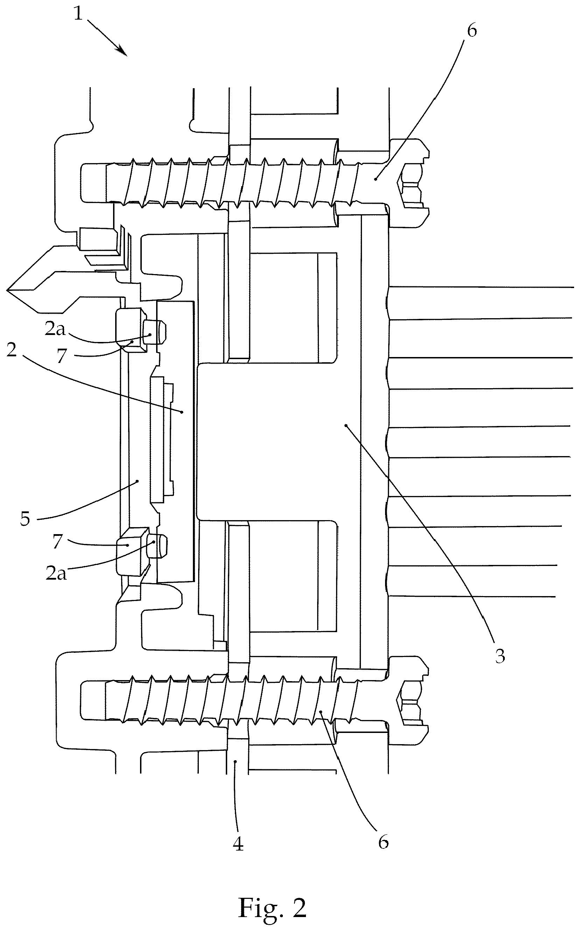

Die Fig. 1 und 2 zeigen zwei Ansichten einer Beleuchtungsvorrichtung 1 für einen Kraftfahrzeugscheinwerfer. Die Beleuchtungsvorrichtung 1 umfasst ein optoelektronisches Bauteil 2, welches eine Wirkseite aufweist, an welcher eine steuerbare Anordnung von mehreren Mikrospiegeln angeordnet ist. Die Mikrospiegel sind in Form einer zweidimensionalen Matrix mit Zeilen und Spalten angeordnet und unabhängig voneinander verschwenkbar. Die Beleuchtungsvorrichtung 1 umfasst überdies ein Kühlelement 3, welches das optoelektronische Bauteil 2 an einer der Wirkseite abgewandten Seite zur Kühlung des optoelektronischen Bauteils 2 kontaktiert, eine Leiterplatte 4, welche zumindest teilweise zwischen dem Kühlelement 3 und dem optoelektronischen Bauteil 2 angeordnet ist und mit dem optoelektronischen Bauteil 2 zu dessen elektronischer Ansteuerung verbunden ist, ein Stabilisierungselement 5, welches dazu eingerichtet ist, die Position des optoelektronischen Bauteils 2 in Bezug auf die Leiterplatte 4 zusätzlich zu stabilisieren, und ein Befestigungselement 6, welches dazu eingerichtet ist, das Stabilisierungselement 5 und das Kühlelement 3 miteinander zu verbinden. Das Stabilisierungselement 5 ist plattenförmig ausgestaltet.

Das Stabilisierungselement 5 weist eine Öffnung 5a zum Umschließen des optoelektronischen Bauteils 2 auf, wobei sich von einem Rand der Öffnung 5a weg zumindest zwei Stabilisierungsarme 7 erstrecken. Die Öffnung 5a ist im Wesentlichen rechteckig ausgebildet. Die Stabilisierungsarme 7 sind dazu eingerichtet, im verbundenen Zustand an der Wirkseite des optoelektronischen Bauteils 2 an dem optoelektronischen Bauteil 2 anzugreifen. Die Stabilisierungsarme 7 und die Öffnung 5a liegen in derselben Ebene. Im verbundenen Zustand kontaktiert das Kühlelement 3 das optoelektronische Bauteil 2 an der der Wirkseite abgewandten Seite dergestalt, dass dieses auf das optoelektronische Bauteil 2 einen in Richtung der Wirkseite des optoelektronischen Bauteils 2 wirkenden Druck ausübt. Die zumindest zwei Stabilisierungsarme 7 sind federnd ausgebildet und greifen an der Wirkseite des optoelektronischen Bauteils 2 an, sodass die zumindest zwei Stabilisierungsarme 7 diesem Druck des Kühlelements 3 entgegenwirken.

Die Stabilisierungsarme 7 sind jeweils parallel zu einer Seite der rechteckigen Öffnung 5a orientiert. Die Stabilisierungsarme 7 sind an sich gegenüberliegenden Seiten der rechteckigen Öffnung 5a angeordnet.

In dem in Fig. 1 gezeigten Ausführungsbeispiel, umfasst das Stabilisierungselement 5 drei Stabilisierungsarme 7, wobei ein dritter Stabilisierungsarm an einer kurzen Seite der rechteckigen Öffnung 5a angeordnet ist. Die Länge der Stabilisierungsarme 7 entspricht vorzugsweise 25% bis 75%, insbesondere 40% bis 60%, besonders bevorzugt 50%, der Länge einer Rechteckseite.

Wie in Fig. 2 ersichtlich, umfasst das Befestigungselement 6 zumindest zwei Schrauben, mit welchen im verbundenen Zustand das Stabilisierungselement 5 mit dem Kühlelement 3 verschraubt ist. Das optoelektronische Bauteil 2 weist an der Wirkseite zumindest zwei Haltebereiche 2a auf, wobei an jedem Haltebereich 2a jeweils ein Stabilisierungsarm 7 anliegt. Die Leiterplatte 4 weist an entsprechenden Stellen Durchtrittöffnungen auf, durch welche das Befestigungselement 6 im verbundenen Zustand durchtritt. Das Befestigungselement 6 greift in eine entsprechende Eingriffsöffnung im Stabilisierungselement 5 ein, um eine feste Verbindung zwischen dem Stabilisierungselement 5 und dem Kühlelement 3 zu erzielen, wobei die Leiterplatte 4 und das optoelektronisch Bauteil 2 im Wesentlichen zwischen dem Stabilisierungselement 5 und dem Kühlelement 3 angeordnet sind. Der Schichtaufbau ist in Fig. 2 ersichtlich.

## Patentansprüche

1. Beleuchtungsvorrichtung (1) für einen Kraftfahrzeugscheinwerfer, umfassend
- ein optoelektronisches Bauteil (2), wobei das optoelektronische Bauteil (2) eine Wirkseite aufweist, an welcher eine steuerbare Anordnung von mehreren Mikrospiegeln angeordnet ist, welche Mikrospiegel in Form einer zweidimensionalen Matrix mit Zeilen und Spalten angeordnet sind und unabhängig voneinander verschwenkbar sind,
- ein Kühlelement (3), welches das optoelektronische Bauteil (2) an einer der Wirkseite abgewandten Seite zur Kühlung des optoelektronischen Bauteils (2) kontaktiert,
- eine Leiterplatte (4), welche zumindest teilweise zwischen dem Kühlelement (3) und dem optoelektronischen Bauteil (2) angeordnet ist und mit dem optoelektronischen Bauteil (2) zu dessen elektronischer Ansteuerung verbunden ist,
- ein Stabilisierungselement (5), welches dazu eingerichtet ist, die Position des optoelektronischen Bauteils (2) in Bezug auf die Leiterplatte (4) zusätzlich zu stabilisieren,
- ein Befestigungselement (6), welches dazu eingerichtet ist, das Stabilisierungselement (5) und das Kühlelement (4) miteinander zu verbinden,
**dadurch gekennzeichnet, dass**
das Stabilisierungselement (5) eine Öffnung (5a) zum Umschließen des optoelektronischen Bauteils (2) aufweist, wobei sich von einem Rand der Öffnung (5a) weg zumindest zwei Stabilisierungsarme (7) erstrecken, welche dazu eingerichtet sind, im verbundenen Zustand an der Wirkseite des optoelektronischen Bauteils (2) an dem optoelektronischen Bauteil (2) anzugreifen, wobei im verbundenen Zustand das Kühlelement (3) das optoelektronische Bauteil (2) an der der Wirkseite abgewandten Seite dergestalt kontaktiert, dass dieses auf das optoelektronische Bauteil (2) einen in Richtung der Wirkseite des optoelektronischen Bauteils (2) wirkenden Druck ausübt, wobei die zumindest zwei Stabilisierungsarme (7) dergestalt federnd ausgebildet sind und an der Wirkseite des optoelektronischen Bauteils (2) angreifen, dass die zumindest zwei Stabilisierungsarme (7) diesem Druck des Kühlelements (3) entgegenwirken.

2. Beleuchtungsvorrichtung (1) nach Anspruch 1, wobei die Stabilisierungsarme (7) und die Öffnung (5a) in derselben Ebene liegen.

3. Beleuchtungsvorrichtung (1) nach einem der vorhergehenden Ansprüche, wobei die Öffnung (5a) im Wesentlichen rechteckig ausgebildet ist.

4. Beleuchtungsvorrichtung (1) nach Anspruch 3, wobei ein erster Stabilisierungsarm (7) im Wesentlichen parallel zu einer ersten Seite der im Wesentlichen rechteckigen Öffnung (5a) orientiert ist und zweiter Stabilisierungsarm (7) im Wesentlichen parallel zu einer zweiten Seite der im Wesentlichen rechteckigen Öffnung (5a) orientiert ist.

5. Beleuchtungsvorrichtung (1) nach Anspruch 3 oder 4, wobei ein erster Stabilisierungsarm (7) und ein zweiter Stabilisierungsarm (7) an sich gegenüberliegenden Seiten der im Wesentlichen rechteckigen Öffnung (5a) angeordnet sind.

6. Beleuchtungsvorrichtung (1) nach einem der Ansprüche 3 bis 5, wobei die Länge eines Stabilisierungsarmes (7) vorzugsweise 25% bis 75%, insbesondere 40% bis 60%, besonders bevorzugt 50%, der Länge einer Rechteckseite (5a) entspricht.

7. Beleuchtungsvorrichtung (1) nach einem der vorhergehenden Ansprüche, umfassend eine Lichtquelle, welche dazu eingerichtet ist, Licht auf das optoelektronische Bauteil (2) abzustrahlen.

8. Beleuchtungsvorrichtung (1) nach einem der vorhergehenden Ansprüche, wobei das Befestigungselement (6) zumindest zwei Schrauben umfasst, mit welchen im verbundenen Zustand das Stabilisierungselement (5) mit dem Kühlelement (3) verschraubt ist.

9. Beleuchtungsvorrichtung (1) nach einem der vorhergehenden Ansprüche, wobei das optoelektronische Bauteil (2) an der Wirkseite zumindest zwei Haltebereiche (2a) aufweist, wobei an jedem Haltebereich (2a) jeweils ein Stabilisierungsarm (7) anliegt.

10. Beleuchtungsvorrichtung (1) nach einem der vorhergehenden Ansprüche, wobei das Stabilisierungselement (5) plattenförmig ausgestaltet ist.

11. Beleuchtungsvorrichtung (1) nach einem der vorhergehenden Ansprüche, wobei das Stabilisierungselement (5) aus einem wärmeisolierenden Material ausgebildet ist oder eine wärmeisolierende Beschichtung aufweist.

12. Kraftfahrzeugscheinwerfer, umfassend eine Beleuchtungsvorrichtung (1) nach einem der Ansprüche 1 bis 11.
